(19) Europäisches Patentamt
European Patent Office
Office européen des brevets

(11) EP 3 603 964 B1

(12) **EUROPEAN PATENT SPECIFICATION**

(45) Date of publication and mention of the grant of the patent:
**18.08.2021 Bulletin 2021/33**

(21) Application number: **18770967.0**

(22) Date of filing: **08.03.2018**

(51) Int Cl.:
***B32B 27/18*** (2006.01)
***B29C 55/12*** (2006.01)
***B32B 27/08*** (2006.01)
***B32B 27/30*** (2006.01)
***G02B 5/30*** (2006.01)

(86) International application number:
**PCT/JP2018/008899**

(87) International publication number:
**WO 2018/173762 (27.09.2018 Gazette 2018/39)**

(54) **STRETCHED MULTILAYER THERMOPLASTIC RESIN FILM**

GESTRECKTE MEHRLAGIGE THERMOPLASTISCHE HARZFOLIE

FILM DE RÉSINE THERMOPLASTIQUE MULTICOUCHE ÉTIRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2017 JP 2017055367**

(43) Date of publication of application:
**05.02.2020 Bulletin 2020/06**

(73) Proprietor: **Mitsubishi Gas Chemical Company, Inc.**
**Tokyo 100-8324 (JP)**

(72) Inventors:
- **TAGUWA, Ken**
**Hiratsuka-shi**
**Kanagawa 254-0016 (JP)**
- **OCHI, Noriaki**
**Hiratsuka-shi**
**Kanagawa 254-0016 (JP)**
- **NYUUI, Tatsuki**
**Hiratsuka-shi**
**Kanagawa 254-0016 (JP)**
- **TSURUYA, Hirotaka**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 2 583 825**
**WO-A1-2011/162183**
**WO-A1-2017/135335**
**JP-A- 2007 017 555**
**JP-A- 2012 206 343**
**JP-A- 2013 114 198**
**US-A1- 2010 134 879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 603 964 B1

## Description

TECHNICAL FIELD

The present invention relates to a stretched multilayer thermoplastic resin film which is suitable for optical applications such as a polarizer protective film.

BACKGROUND ART

In liquid crystal displays, a polarizing plate is used in order to convert transmitted light into linearly polarized light. In general, the polarizing plate is composed of three layers, wherein a polarizer protective film is bonded to both the surfaces of a polarizer.

As the polarizer, a uniaxially oriented film, in which iodine or a dye is adsorbed/dispersed in polyvinyl alcohol (hereinafter abbreviated as "PVA"), is usually used, but such a PVA-based polarizer has low mechanical properties, and tends to be easily shrunk by heat or moisture and have reduced polarizing function. For this reason, such a polarizer is used in the form of a laminate, wherein a polarizer protective film is bonded to both the surfaces of the polarizer. The polarizer protective film is required to have no birefringence, high light transmittance, excellent moisture-proof property/heat resistance, excellent mechanical strength, excellent punching workability, good adhesion to the PVA-based polarizer, etc. When using a polarizer protective film having excellent moisture-proof property, a UV-curable adhesive is generally used for bonding the polarizer and the polarizer protective film. However, the polarizing function of the polarizer is reduced by UV irradiation at the time of curing. For this reason, recently, UV cut properties of 380 nm or less have been also required more often than before for the purpose of preventing reduction in the function of the polarizer at the time of UV curing.

As the polarizer protective film, a triacetyl cellulose (hereinafter abbreviated as "TAC") film is conventionally used. However, since the TAC film has insufficient moisture-proof property, for example, under high-temperature and high-humidity conditions, there are problems such as detachment from the polarizer, reduction in transparency and reduction in the polarization degree of the polarizer. Moreover, since TAC has a large photoelastic coefficient, the phase difference variation tends to be easily caused by external stress, and for example, depending on distortion caused at the time of actual use for the polarizing plate and dimensional change of PVA bonded, color unevenness may be caused or contrast in the peripheral portion may be reduced particularly in large-sized liquid crystal displays.

Patent Document 1 discloses that a polarizer protective film, which has a small photoelastic coefficient and has high optical isotropy even when stretched, can be obtained by using, as the main component, an acrylic copolymer having a lactone ring structural unit that imparts a positive phase difference and a structural unit derived from an aromatic monomer that imparts a negative phase difference. However, in order to obtain required UV cut properties by using the polarizer protective film of Patent Document 1, a large amount of an UV absorber must be added. Therefore, there is a case where roll contamination is caused by bleeding out of the UV absorber at the time of film forming, resulting in poor continuous productivity. In addition, since the acrylic copolymer of Patent Document 1 has high water absorbability, dimensional change and deterioration of film surface accuracy may occur under high humidity including high-temperature and high-humidity conditions.

Patent Document 2 discloses that a stretched film having excellent heat resistance, mechanical strength and optical isotropy can be obtained by stretching a thermoplastic transparent resin, which is obtained by hydrogenation of 70% or more of aromatic double bonds in a copolymer, wherein the molar ratio of a structural unit derived from a (meth)acrylic acid ester monomer to a structural unit derived from an aromatic vinyl monomer is 0.25 to 4. However, also in the case of the stretched film of Patent Document 2, a large amount of an ultraviolet absorber must be added in order to obtain required UV cut properties, and therefore, there is a case where roll contamination is caused by bleeding out of the ultraviolet absorber at the time of film forming, resulting in poor continuous productivity.

Further, in the case of a conventional stretched film, at the time of stretching, when the stretching temperature is low, the degree of orientation is high, and as a result, it is easy to obtain sufficient mechanical physical properties but birefringence tends to increase. When the stretching temperature is too low, a fracture may be generated in the film at the time of stretching. Meanwhile, when the stretching temperature is high, the degree of orientation is low, and a result, increase of birefringence is suppressed but it is difficult to obtain sufficient mechanical physical properties. When the stretching temperature is too high, a fracture may be generated in the film at the time of stretching or outer appearance may be deteriorated. Moreover, in the case of a conventional stretched film, when the degree of orientation is set to be sufficiently high in order to improve mechanical physical properties, easiness of tearing in the film thickness direction is simultaneously increased, and for this reason, a crack or tearing in the thickness direction may be caused at the time of the punching process.

Patent Document 3 discloses a film obtained by stretching a film wherein two acrylic layers (B1) and (B2) containing no UV light absorbing agents are disposed on two surfaces of an acrylic resin layer (A) containing an UV light absorbing agent.

PRIOR ART DOCUMENTS

PATENT DOCUMENTS

Patent Document 1: Japanese Patent No. 4878302
Patent Document 2: Japanese Laid-Open Patent Publication No. 2008-115314
Patent Document 3: US 2010/0134879 A1

SUMMARY OF THE INVENTION

PROBLEMS TO BE SOLVED BY THE INVENTION

Under the above-described circumstances, the objective of the present invention is to provide a stretched multilayer thermoplastic resin film having adhesion, stretchability, optical isotropy, mechanical strength and dimensional stability under high-humidity conditions as well as excellent continuous productivity and punching workability, which is suitably used for a polarizer protective film.

MEANS FOR SOLVING THE PROBLEMS

The present inventors diligently made researches in order to solve the above-described problems, and found that a film having continuous productivity, adhesion, stretchability, optical isotropy, mechanical strength and dimensional stability under high-humidity conditions can be obtained by stretching a thermoplastic resin laminate satisfying specific properties, and thus the present invention was achieved. The present invention provides a stretched multilayer thermoplastic resin film described below.
Note that in this specification, "(meth)acrylic acid" means acrylic acid or methacrylic acid.
A stretched multilayer thermoplastic resin film which comprises layers containing a thermoplastic resin (B) on both surfaces of a layer that contains a thermoplastic resin (A) and elastic particles, wherein: respective intrinsic birefringences of the thermoplastic resin (A) and the thermoplastic resin (B) are within the range of from -0.005 to 0.005; the content ratio of the elastic particles in the whole layer containing the thermoplastic resin (A) and the elastic particles is 5 to 40% by weight; the glass transition temperature of the thermoplastic resin (B) is 110°C or higher; and the saturated water absorption rate of the thermoplastic resin (B) is less than 1.1 wt%.
The thermoplastic resin (B) comprises a (meth)acrylic acid ester structural unit (a) represented by general formula (1) below:

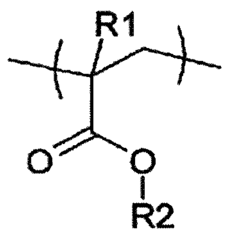

(1)

(wherein R1 represents a hydrogen atom or a methyl group, and R2 represents a $C_1$-$C_{16}$ hydrocarbon group), and an aliphatic vinyl structural unit (b) represented by general formula (2) below:

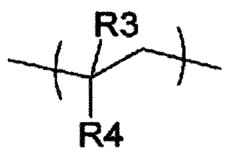

(2)

(wherein R3 represents a hydrogen atom or a methyl group, and R4 represents a cyclohexyl group or a cyclohexyl group having a $C_1$-$C_4$ hydrocarbon substituent), and wherein the ratio of the sum of the (meth)acrylic acid ester structural unit (a) and the aliphatic vinyl structural unit (b) is 90 to 100 mol% relative to the sum of all the structural units in the thermoplastic resin (B), and wherein the molar ratio between the (meth)acrylic acid ester structural unit (a) and the

aliphatic vinyl structural unit (b) is 55:45 to 85:15.
As further embodiments of the invention, the following are provided.
An optical film comprising the stretched multilayer thermoplastic resin film according to the invention.
A polarizer protective film comprising the optical film according to the invention.
A polarizing plate comprising the polarizer protective film according to the invention and a polarizer.
A method for producing the stretched multilayer thermoplastic resin film according to the invention, which comprises stretching at a stretching temperature that is equal to or higher than the glass transition temperature TgB (°C) of the thermoplastic resin (B).

ADVANTAGEOUS EFFECT OF THE INVENTION

The stretched multilayer thermoplastic resin film obtained by the present invention has adhesion, stretchability, optical isotropy, mechanical strength and dimensional stability under high-humidity conditions, and in addition, a crack and a fracture in the thickness direction are rarely generated or not generated at the time of punching since sufficient mechanical strength can be obtained without excessive increase of the degree of orientation. Therefore, the film can be suitably used for optical applications such as a polarizer protective film. Moreover, the stretched multilayer thermoplastic resin film of the present invention has excellent continuous productivity because roll contamination due to bleeding out rarely occurs or does not occur at the time of film forming even when a low-molecular-weight additive such as an ultraviolet absorber is added.

EMBODIMENT FOR CARRYING OUT THE INVENTION

Hereinafter, the present invention will be described in detail. The stretched multilayer thermoplastic resin film of the present invention is a stretched multilayer thermoplastic resin film as defined in the annexed claims, obtained by laminating a layer containing a thermoplastic resin (B) on both the surfaces of a layer containing a thermoplastic resin (A) and elastic particles. The stretched film can be produced by stretching a thermoplastic resin laminate, wherein: respective intrinsic birefringences of the thermoplastic resin (A) and the thermoplastic resin (B) are within the range of from - 0.005 to 0.005; the content ratio of the elastic particles in the whole layer containing the thermoplastic resin (A) and the elastic particles is 5 to 40% by weight; the glass transition temperature TgB (°C) of the thermoplastic resin (B) is 110°C or higher; and the saturated water absorption rate of the thermoplastic resin (B) is less than 1.1 wt%. In the present invention, the glass transition temperature is a temperature obtained by carrying out the measurement using a differential scanning calorimeter and 10 mg of a sample at a temperature raising rate of 10°C/min and calculation according to a midpoint method with second heating. Further, in the present invention, the saturated water absorption rate is obtained as follows: a disk-like molded plate having a diameter of 50 mm and a thickness of 3 mm, which is dried at 100°C for 24 hours in advance, is immersed in water at 23°C and taken out therefrom at regular intervals to measure the weight thereof; and the water absorption rate at the time when increase in the weight due to water absorption stops is calculated using the below-described formula.
Water absorption rate (wt%)=(mass value of molded plate after water absorption - mass value of molded plate before water absorption)/mass value of molded plate before water absorption$\times$100
The thermoplastic resin (A) to be used in the stretched multilayer thermoplastic resin film of the present invention is not particularly limited, but when obtaining a stretched multilayer thermoplastic resin film having excellent optical isotropy, the intrinsic birefringence of the thermoplastic resin (A) is -0.005 to 0.005, and preferably -0.003 to 0.003. When the intrinsic birefringence of the thermoplastic resin (A) is -0.005 to 0.005, a stretched multilayer thermoplastic resin film obtained exhibits excellent optical isotropy. Examples of the thermoplastic resin (A) include poly(methyl methacrylate), an acrylic copolymer containing a lactone ring structure and a styrene structural unit (for example, described in Patent Document 1), a cyclic polyolefin resin, a methyl methacrylate-phenylmaleimide-cyclohexylmaleimide copolymer, and an acrylic copolymer having a glutarimide structural unit.
The elastic particles to be used in the stretched multilayer thermoplastic resin film of the present invention are made of a rubber-like elastic body. Examples of the rubber-like elastic body include an acrylic ester-based rubber-like polymer, a rubber-like polymer mainly composed of butadiene, and an ethylene-vinyl acetate copolymer. Examples of the acrylic ester-based rubber-like polymer include those mainly composed of butyl acrylate, 2-ethylhexyl acrylate or the like. Among them, an acrylic ester-based polymer mainly composed of butyl acrylate is preferred. Further, in the elastic particles, several types of polymers may be layered, and typical examples thereof include multilayer elastic particles in which a grafted rubber elastic component of acrylic acid alkyl ester such as butyl acrylate and styrene, and a hard resin layer made of methyl (meth)acrylate and/or a copolymer of methyl (meth)acrylate and acrylic acid alkyl ester form layers having a core-shell structure.
When improving adhesion between the layer containing the thermoplastic resin (A) and the elastic particles and the layer containing the thermoplastic resin (B) in the stretched multilayer thermoplastic resin film of the present

invention, it is preferred that the elastic particles are multilayer elastic particles and that the outermost layer of the multilayer elastic particles is made of a specific structural unit. As a monomer unit constituting the outermost layer, methyl methacrylate and other monomers copolymerizable therewith as described below are used: a methacrylic acid ester other than methyl methacrylate such as ethyl methacrylate, butyl methacrylate, benzyl methacrylate and cyclohexyl methacrylate; an acrylic acid ester such as methyl acrylate, ethyl acrylate, butyl acrylate, 2-ethylhexyl acrylate, cyclohexyl acrylate and benzyl acrylate; an aromatic vinyl compound such as styrene, vinyl toluene and α-methylstynene; an N-substituted maleimide compound such as N-cyclohexylmaleimide, N-o-chlorophenylmaleimide and N-tert-butylmaleimide; and a vinyl cyanide compound such as acrylonitrile and methacrylonitrile. These substances may be used solely, or two or more of them may be used in combination. Further, regarding the outermost layer of the multilayer elastic particles, the molecular weight is preferably adjusted using a chain transfer agent according to need because it is important from the viewpoint of melt flowability and compatibility of the thermoplastic resin (A) and the multilayer elastic particles and adhesion to the layer containing the thermoplastic resin (B). Examples of the chain transfer agent to be used according to need include n-octyl mercaptan, n-dodecyl mercaptan, tert-dodecyl mercaptan and sec-butyl mercaptan. Examples of the multilayer elastic particles satisfying the above-described matters include multilayer elastic particles having a three-layer structure which consist of: (1) a layer (i) consisting of a methyl (meth)acrylate unit and a multifunctional monomer such as allyl (meth)acrylate as the innermost layer; (2) a layer (ii), which consists of a butyl (meth)acrylate unit, a styrene unit and a multifunctional monomer such as allyl (meth)acrylate, and which includes the layer (i) inside, as the intermediate layer; and (3) a layer (iii), which consists of a methyl (meth)acrylate unit, and which includes the layer (ii) inside, as the outermost layer.

Regarding the elastic particles to be used in the stretched multilayer thermoplastic resin film of the present invention, the number-average particle diameter thereof in the state of being dispersed in the thermoplastic resin (A) is 2.0 μm or less, preferably 0.1 to 1.0 μm, and more preferably 0.1 to 0.5 μm. Even when the primary particle diameter of the elastic particles is small, if the diameter of secondary particles formed by aggregation or the like is large, the haze of the stretched multilayer thermoplastic resin film obtained is increased, and therefore it is not appropriate for optical applications. Further, when the number-average particle diameter is too small, the flexibility tends to be reduced. When the particle diameter of the elastic particles is within the above-described range, a stretched film having excellent balance between transparency and flexibility can be easily obtained.

In the present invention, the refractive index n (λ) of the elastic particles at a wavelength of 380 to 700 nm and the refractive index nA (λ) of the thermoplastic resin (A) at a wavelength of 380 to 700 nm preferably satisfy $|n(\lambda)-nA(\lambda)| \leq 0.05$, and more preferably satisfy $|n(\lambda)-nA(\lambda)| \leq 0.04$. Note that n (λ) and nA (λ) are average values of principal refractive indices at a wavelength λ. When the value of $|n(\lambda)-nA(\lambda)|$ satisfies the above-described range, a stretched film obtained has excellent transparency.

Regarding the elastic particles to be used in the stretched multilayer thermoplastic resin film of the present invention, the content ratio of the elastic particles in the whole layer containing the thermoplastic resin (A) and the elastic particles is 5 to 40% by weight, and preferably 10 to 30% by weight. When the content ratio of the elastic particles is less than 5% by weight, there is a case where sufficient flexibility cannot be obtained. When the content ratio of the elastic particles is more than 40% by weight, the haze of the stretched multilayer thermoplastic resin film obtained tends to be higher. When the content ratio of the elastic particles is within the above-described range, a stretched film obtained has excellent balance between transparency and flexibility.

In the layer containing the thermoplastic resin (A) and the elastic particles to be used in the stretched multilayer thermoplastic resin film of the present invention, another resin can be blended in addition to the thermoplastic resin (A) and the elastic particles as long as transparency and optical isotropy are not impaired. Examples of said another resin include polystyrene, a methyl methacrylate-styrene copolymer resin, an acrylonitrile-styrene copolymer resin, poly(methyl methacrylate), a methyl methacrylate-styrene-maleic anhydride copolymer resin, a styrene-maleic anhydride copolymer resin, a cyclic polyolefin resin, a maleimide-modified acrylic resin, polycarbonate and polyester. Specific examples thereof include RESISFY R-100 (manufactured by Denki Kagaku Kogyo K.K.) and XIRAN SZ15170 (manufactured by Polyscope).

The thermoplastic resin (B) to be used in the stretched multilayer thermoplastic resin film of the present invention is characterized in that the glass transition temperature TgB (°C) is 110°C or higher and that the saturated water absorption rate is less than 1.1 wt%. When the glass transition temperature TgB is lower than 110°C, heat resistance may be poor from a practical viewpoint. When the saturated water absorption rate is 1.1 wt% or more, dimensional change under a wet heat environment increases, and for example, when used as a polarizer protective film, detachment from a substrate or unevenness in display quality occurs, and therefore it is not preferred. The glass transition temperature TgB (°C) of the thermoplastic resin (B) is more preferably 110 to 160°C, and particularly preferably 120 to 145°C. Further, the saturated water absorption rate of the thermoplastic resin (B) is more preferably less than 1.0 wt%, and particularly preferably less than 0.9 wt%. When the thermoplastic resin (B) has a glass transition temperature TgB (°C) of 110°C or higher and a saturated water absorption rate of less than 1.1 wt%, a stretched film obtained has excellent dimensional stability under high-humidity conditions.

Moreover, to obtain a stretched multilayer thermoplastic resin film having excellent optical isotropy, the intrinsic birefringence of the thermoplastic resin (B) is -0.005 to 0.005, and preferably -0.003 to 0.003. When the intrinsic birefringence of the thermoplastic resin (B) is smaller than -0.005 or larger than 0.005, birefringence is developed in the layer containing the thermoplastic resin (B) at the time of stretching, and for this reason, it is difficult to obtain a stretched multilayer thermoplastic resin film having excellent optical isotropy. Since the intrinsic birefringence of each of the thermoplastic resin (A) and the thermoplastic resin (B) is -0.005 to 0.005, the stretched multilayer thermoplastic resin film of the present invention has excellent optical isotropy. Further, it is more preferred that the photoelastic coefficient of the thermoplastic resin (B) is $-1.0\times10^{-11}$ to $10\times10^{-11}$ $m^2/N$. When the photoelastic coefficient of the thermoplastic resin (B) is smaller than $-1.0\times10^{-11}$ $m^2/N$ or larger than $1.0\times10^{-11}$ $m^2/N$, birefringence tends to be easily developed in the layer containing the thermoplastic resin (B) at the time of stretching and the phase difference variation due to external stress increases, and therefore it may be impractical depending on its intended use. As the thermoplastic resin (B) satisfying the above-described matters, a vinyl copolymer resin (B1) is used because it has excellent optical isotropy. Hereinafter, the vinyl copolymer resin (B1) will be described in detail.
The resin (B1) comprises a (meth)acrylic acid ester structural unit (a) represented by general formula (1) below:

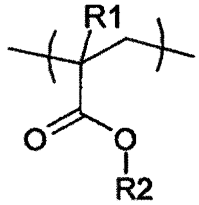

(1)

(wherein R1 represents a hydrogen atom or a methyl group, and R2 represents a $C_1$-$C_{16}$ hydrocarbon group), and an aliphatic vinyl structural unit (b) represented by general formula (2) below:

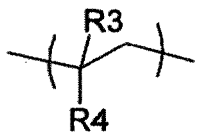

(2)

(wherein R3 represents a hydrogen atom or a methyl group, and R4 represents a cyclohexyl group or a cyclohexyl group having a $C_1$-$C_4$ hydrocarbon substituent), and wherein a ratio of the sum of the (meth)acrylic acid ester structural unit (a) and the aliphatic vinyl structural unit (b) is 90 to 100 mol% relative to the sum of all the structural units in the thermoplastic resin (B), and wherein a molar ratio between the (meth)acrylic acid ester structural unit (a) and the aliphatic vinyl structural unit (b) is 55:45 to 85:15.

The vinyl copolymer resin (B1) that is suitably used as the thermoplastic resin (B) of the present invention is a thermoplastic resin, and it is obtained by hydrogenation of 70% or more of aromatic double bonds in the structural unit (b') derived from the aromatic vinyl monomer in a vinyl copolymer resin (B1') containing a structural unit (a) derived from a (meth)acrylic acid ester monomer represented by general formula (1) below and a structural unit (b') derived from an aromatic vinyl monomer represented by general formula (2') below, in which the ratio of the structural unit (a) to the sum of the structural unit (a) and the structural unit (b') is 55 to 85 mol%. That is, the vinyl copolymer resin (B1') is a thermoplastic resin prior to hydrogenation of aromatic double bonds in the vinyl copolymer resin (B1).

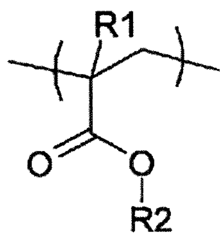

(1)

(In the formula, R1 represents a hydrogen atom or a methyl group, and R2 represents a $C_1$-$C_{16}$ hydrocarbon group.)

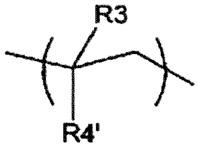

(2')

(In the formula, R3 represents a hydrogen atom or a methyl group, and R4' represents a phenyl group or a phenyl group having a $C_1$-$C_4$ hydrocarbon substituent.)

In the vinyl copolymer resin (B1), the molar ratio between the (meth)acrylic acid ester structural unit (a) represented by general formula (1) and the aliphatic vinyl structural unit (b) represented by general formula (2) is 55:45 to 85:15, and preferably 60:40 to 80:20. When the molar ratio of the (meth)acrylic acid ester structural unit (a) to the sum of the (meth)acrylic acid ester structural unit (a) and the aliphatic vinyl structural unit (b) is less than 55%, the adhesion to the layer containing the thermoplastic resin (A) may be low, and therefore it is not preferred. Further, when the molar ratio is more than 85%, dimensional change of a stretched film obtained under high-humidity conditions increases and accuracy of film surfaces may be deteriorated, and therefore it is not preferred.

The ratio of the sum of the (meth)acrylic acid ester structural unit (a) and the aliphatic vinyl structural unit (b) to the sum of all the structural units in the thermoplastic resin (B) is 90 to 100 mol%, and more preferably 95 to 100 mol%.

In the structural unit (a) derived from the (meth)acrylic acid ester monomer represented by general formula (1) constituting the vinyl copolymer resin (B1'), R1 represents a hydrogen atom or a methyl group, and R2 represents a $C_1$-$C_{16}$ hydrocarbon group. When there are a plurality of the structural units (a), a plurality of R1s and R2s may be respectively the same or different from each other. The (meth)acrylic acid ester monomer is preferably a (meth)acrylic acid ester monomer in which R2 is at least one selected from the group consisting of a methyl group, an ethyl group, a butyl group, a lauryl group, a stearyl group, a cyclohexyl group and an isobornyl group. Specific examples thereof include (meth)acrylic acid alkyl esters such as methyl (meth)acrylate, ethyl (meth)acrylate, butyl (meth)acrylate, lauryl (meth)acrylate, stearyl (meth)acrylate, cyclohexyl (meth)acrylate and isobornyl (meth)acrylate. The structural unit (a) is more preferably a structural unit derived from at least one selected from methyl methacrylate and methyl acrylate. When the structural unit (a) of the vinyl copolymer resin (B1') is a structural unit derived from at least one selected from methyl methacrylate and methyl acrylate, the vinyl copolymer resin (B1) to be used in the stretched multilayer thermoplastic resin film of the present invention has excellent transparency.

In the structural unit (b') derived from the aromatic vinyl monomer represented by general formula (2'), R3 represents a hydrogen atom or a methyl group, and R4' represents a phenyl group or a phenyl group having a $C_1$-$C_4$ hydrocarbon substituent. When there are a plurality of the structural units (b'), a plurality of R3s and R4's may be respectively the same or different from each other. Examples of the aromatic vinyl monomer include at least one selected from styrene, α-methylstyrene, o-methylstyrene and p-methylstyrene. The structural unit (b') is more preferably a structural unit derived from styrene, wherein R3 represents a hydrogen atom and R4' represents a phenyl group. When the structural unit (b') is a structural unit derived from styrene, the vinyl copolymer resin (B1) to be used in the stretched multilayer thermoplastic resin film of the present invention has excellent dimensional stability under high-humidity conditions.

The vinyl copolymer resin (B1) to be suitably used as the thermoplastic resin (B) of the present invention can be obtained by hydrogenation of 70% or more of all aromatic double bonds in the structural unit (b') derived from the aromatic vinyl monomer in the vinyl copolymer resin (B1') according to the method described later. As noted above, the vinyl copolymer resin contains an aliphatic vinyl structural unit (b) represented by general formula (2). In addition, the vinyl copolymer resin (B1) may contain a structural unit in which a part of aromatic double bonds of a phenyl group of R4' (a phenyl group or a phenyl group having a $C_1$-$C_4$ hydrocarbon substituent) in the structural unit (b') are hydrogenated, and may contain a structural unit in which aromatic double bonds of a phenyl group are not hydrogenated. Specific examples of the structural unit in which a part of aromatic double bonds of a phenyl group of R4' are hydrogenated include structural units derived from cyclohexene, cyclohexadiene, α-methylcyclohexene, α-methylcyclohexadiene, o-methylcyclohexene, o-methylcyclohexadiene, p-methylcyclohexene and p-methylcyclohexadiene, and at least one structural unit selected from these examples may be contained. In particular, a structural unit derived from at least one selected from cyclohexane and α-methylcyclohexane is preferably contained.

The vinyl copolymer resin (B1') prior to hydrogenation of the vinyl copolymer resin (B1) that is suitably used as the thermoplastic resin (B) of the present invention can be produced by polymerization of the (meth)acrylic acid ester monomer and the aromatic vinyl monomer. A publicly-known method can be used for polymerization, and for example, the production can be carried out according to a bulk polymerization method, a solution polymerization method or the like. The bulk polymerization method is carried out, for example, by a method of continuously supplying a monomer composition containing the above-described monomers and a polymerization initiator to a complete mixing tank to perform continuous polymerization at 100 to 180°C. The above-described monomer composition may contain a chain transfer agent according to need.

The polymerization initiator is not particularly limited, and examples thereof include organic peroxides such as t-amyl peroxy-2-ethylhexanoate, t-butyl peroxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexyl peroxyisopropyl monocarbonate, t-amyl peroxy-n-octoate, t-butyl peroxyisopropyl monocarbonate and di-t-butyl peroxide, and azo compounds such as 2,2'-azobisisobutyronitrile, 2,2'-azobis(2-methylbutyronitrile) and 2,2'-azobis(2,4-dimethylvaleronitrile). These substances may be used solely, or two or more of them may be used in combination.

The chain transfer agent may be used according to need, and examples thereof include $\alpha$-methylstyrene dimer.

Examples of the solvent to be used in the solution polymerization method include hydrocarbon-based solvents such as toluene, xylene, cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

The vinyl copolymer resin (B1) that is suitably used as the thermoplastic resin (B) of the present invention is obtained by polymerizing the (meth)acrylic acid ester monomer and the aromatic vinyl monomer to obtain the vinyl copolymer resin (B1'), followed by hydrogenation of 70% or more of aromatic double bonds in the structural unit derived from the aromatic vinyl monomer in the vinyl copolymer resin (B1'). The solvent to be used in the above-described hydrogenation reaction may be the same as or different from the aforementioned polymerization solvent. Examples thereof include hydrocarbon-based solvents such as cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

The method for hydrogenation is not particularly limited, and a publicly-known method can be used. For example, hydrogenation can be performed at a hydrogen pressure of 3 to 30 MPa and a reaction temperature of 60 to 250°C by means of a batch type or continuous flow-type reaction. When the temperature is 60°C or higher, the reaction time is not too long, and when the temperature is 250°C or lower, cut of a molecular chain and hydrogenation of an ester moiety are rarely caused.

Examples of the catalyst to be used in hydrogenation reaction include a solid catalyst in which a metal such as nickel, palladium, platinum, cobalt, ruthenium and rhodium, or an oxide, salt or complex of the metal is carried by a porous carrier such as carbon, alumina, silica, silica-alumina and diatomaceous earth.

The vinyl copolymer resin (B1) that is suitably used as the thermoplastic resin (B) of the present invention is obtained by hydrogenation of 70% or more of aromatic double bonds in the structural unit derived from the aromatic vinyl monomer in the vinyl copolymer resin (B1'). That is, the ratio of aromatic double bonds that remain in the structural unit derived from the aromatic vinyl monomer is 30% or less. When the ratio exceeds 30%, transparency of the vinyl copolymer resin (B1) is reduced, and as a result, transparency of the stretched multilayer thermoplastic resin film of the present invention may be reduced. The ratio of the aromatic double bonds that remain in the structural unit derived from the aromatic vinyl monomer is preferably less than 10%, and more preferably less than 5%. Further, the vinyl copolymer resin (B1) may contain generally-used additives such as an antioxidant, an anti-coloring agent, an ultraviolet absorber, a light diffusing agent, a flame retardant, a mold release agent, a lubricant, an antistatic agent and a stain pigment.

The weight average molecular weight of the vinyl copolymer resin (B1) is not particularly limited, and it is preferably 40,000 to 500,000, and more preferably 50,000 to 300,000 from the viewpoint of strength and moldability. The above-described weight average molecular weight is a standard polystyrene equivalent weight average molecular weight measured by gel permeation chromatography (GPC).

The glass transition temperature of the vinyl copolymer resin (B1) is preferably 110 to 160°C, and more preferably 120 to 145°C. When the glass transition temperature of the vinyl copolymer resin (B1) is lower than 110°C, dimensional change or warpage may occur in the stretched multilayer thermoplastic resin film provided by the present invention under high-temperature or high-humidity conditions. When the glass transition temperature of the vinyl copolymer resin (B1) is higher than 160°C, the stretching process must be performed at a high temperature. For this reason, in the case of using a widely used resin having a low glass transition temperature as the thermoplastic resin (A), it is difficult to increase the degree of orientation of the layer containing the thermoplastic resin (A), and there is a case where sufficient mechanical physical properties cannot be obtained.

In the layer containing the vinyl copolymer resin (B1) that is suitably used as the thermoplastic resin (B) of the present invention, in addition to the vinyl copolymer resin (B1), another resin can be blended as long as transparency of the product is not impaired. Examples of said another resin include polystyrene, a methyl methacrylate-styrene copolymer resin, an acrylonitrile-styrene copolymer resin, poly(methyl methacrylate), polycarbonate and polyester. Specific examples (trade names) thereof include Estyrene MS200 (manufactured by Nippon Steel & Sumikin Chemical Co., Ltd.), RESISFYR-100 (manufactured by Denki Kagaku Kogyo K.K.), XIRAN SZ15170 (manufactured by Polyscope) and Toyo Styrene T080 (manufactured by TOYO STYRENE Co., Ltd.). Further, the vinyl copolymer resin (B1) may contain generally-used additives such as an antioxidant, an anti-coloring agent, an ultraviolet absorber, a light diffusing agent, a flame retardant, a mold release agent, a lubricant, an antistatic agent and a stain pigment.

Hereinafter, the layer containing the thermoplastic resin (A) and the elastic particles is sometimes referred to

as "the thermoplastic resin (A) layer", and the layer containing the thermoplastic resin (B) is sometimes referred to as "the thermoplastic resin (B) layer".

As an example of the layer structure of the stretched multilayer thermoplastic resin film of the present invention, from the viewpoint of heat resistance, mechanical strength, dimensional change under high-humidity conditions and deterioration of film surface accuracy of the stretched multilayer thermoplastic resin film obtained, preferred is a three-layer structure consisting of two types of layers, the thermoplastic resin (B) layer/the thermoplastic resin (A) layer/thermoplastic resin (B) layer. When the thermoplastic resin (B) layer is laminated on both the surfaces of the thermoplastic resin (A) layer as described above, the stretched multilayer thermoplastic resin film of the present invention has excellent heat resistance, mechanical strength, and dimensional stability under high-humidity conditions.

The thermoplastic resin (A) layer and/or the thermoplastic resin (B) layer of the stretched multilayer thermoplastic resin film of the present invention may contain an ultraviolet absorber. When a large amount of the ultraviolet absorber is required to be added, it is preferred to employ a three-layer structure consisting of two types of layers, the thermoplastic resin (B) layer/the thermoplastic resin (A) layer/the thermoplastic resin (B) layer, wherein the ultraviolet absorber is added only to the thermoplastic resin (A) layer. When employing the three-layer structure consisting of two types of layers, the thermoplastic resin (B) layer/the thermoplastic resin (A) layer/the thermoplastic resin (B) layer, wherein the ultraviolet absorber is added only to the thermoplastic resin (A) layer as described above, roll contamination due to bleeding out of the ultraviolet absorber is at a low level or does not occur at the time of film forming, and excellent continuous productivity can be obtained. Examples of the ultraviolet absorber to be added include: benzophenone-based ultraviolet absorbers such as 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone and 2,2',4,4'-tetrahydroxybenzophenone; benzotriazole-based ultraviolet absorbers such as 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole and (2H-benzotriazol-2-yl)-4,6-bis(1-methyl-1-phenylethyl)phenol; benzoate-based ultraviolet absorbers such as phenyl salicylate and 2,4-di-t-butylphenyl-3,5-di-t-butyl-4-hydroxybenzoate; hindered amine-based ultraviolet absorbers such as bis(2,2,6,6-tetramethylpiperidin-4-yl) sebacate; and triazine-based ultraviolet absorbers such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine and 2,4-diphenyl-6-(2-hydroxy-4-benzyloxyphenyl)-1,3,5-triazine. The mixing method is not particularly limited, and it is possible to use a method of compounding the total amount of the ultraviolet absorber, a method of dry-blending a master batch or the like.

In the present invention, various types of additives other than the ultraviolet absorber can be mixed into the thermoplastic resin (A) layer and/or thermoplastic resin (B) layer of the stretched multilayer thermoplastic resin film. Examples of such additives other than the ultraviolet absorber include an antioxidant, an anti-coloring agent, an antistatic agent, a mold release agent, a lubricant, a dye and a pigment. The mixing method is not particularly limited, and it is possible to use a method of compounding the total amount of the additives, a method of dry-blending a master batch, a method of dry-blending the total amount of the additives or the like.

In the method for producing the stretched multilayer thermoplastic resin film of the present invention, a thermoplastic resin laminate formed by a publicly-known multicolor injection molding method, film insert method, melt extrusion method, extrusion laminating method, hot pressing method, solution casting method or the like can be used as a raw material film (hereinafter just referred to as "the raw film") for a stretched film. From the viewpoint of the productivity, the melt extrusion method is particularly preferably used. When using the melt extrusion method, there is a case where, as a planar molded body as an intermediate, the raw film is not taken out and continuously subjected to a stretching step. In this regard, in the present invention, the state of the film immediately prior to be substantially stretched is defined as the raw film.

The preparation of the raw film by means of the melt extrusion method will be described in more detail. The raw film of thermoplastic resin to be used in the present invention can be obtained by using a publicly-known melt extrusion method such as a T-die extrusion method and an inflation method. From the viewpoint of obtaining a raw film with a small uneven thickness, it is desirable to employ the T-die extrusion method. As an apparatus for melting a resin, a generally-used extruder may be used, and it may be either a single screw extruder or a multi-screw extruder. The extruder may have at least one vent, and moisture, a low-molecular-weight substance, etc. may be removed from molten resin by subjecting the vent to pressure reduction. Further, a wire mesh filter, a sintered filter, a gear pump, etc. may be provided to the end or downstream side of the extruder according to need. As a method for laminating resin, a publicly-known method such as a feed block method and a multi-manifold method can be used. Examples of T-dies include a coat hanger die, a fish-tail die and a stack plate die, and any of these examples may be selected.

The resin temperature at the time of extrusion is preferably 200 to 300°C. When the temperature is lower than 200°C, the flowability of resin is insufficient and the shape of the surface of a transfer roll is not transferred, resulting in

poor smoothness. Meanwhile, when the temperature is higher than 300°C, the resin is decomposed and this causes poor outer appearance, coloring, reduction in heat deformation resistance, deterioration of working environment due to odors, etc., and therefore it is not preferred. More preferably, the resin temperature at the time of extrusion is 220 to 280°C. When the temperature for extrusion is within the above-described range, the raw film obtained has excellent smoothness and transparency.

As a method for cooling a molten resin extruded from a T-die, a conventionally known method can be used. In general, cooling is performed using a cooling roll. Since the thermoplastic resin (A) and the thermoplastic resin (B) to be used in the present invention are substantially amorphous resins, the temperature of the cooling roll can be set in a wide range. For obtaining a raw film having excellent optical isotropy, the range of the temperature of the cooling roll is preferably the glass transition temperature of the thermoplastic resin (B) ±30°C, and more preferably the glass transition temperature of the thermoplastic resin (B) ±20°C. For obtaining the raw film having excellent optical isotropy, it is preferred to control the discharge rate, taking-up speed and temperature of the cooling roll depending on the apparatus so that the material is not substantially stretched.

The stretched multilayer thermoplastic resin film of the present invention is obtained by stretching the raw film. By means of stretching, mechanical strength is increased, and the stretched multilayer thermoplastic resin film, in which a crack or fracture is not easily generated, and which is excellent in handling properties, can be obtained. The stretching method is not particularly limited, and a publicly-known method can be used. Examples of the method include uniaxial stretching such as a free end uniaxial stretching method and a fixed end uniaxial stretching method and biaxial stretching such as a simultaneous biaxial stretching method and a successive biaxial stretching method. Preferred is biaxial stretching since unevenness of mechanical strength can be suppressed thereby.

When biaxial stretching is performed, the stretching magnification in the stretching direction is preferably 1.1 to 3.0 times, and more preferably 1.2 to 2.0 times. When the stretching magnification is within the range of 1.2 to 2.0 times, a large effect of improving mechanical strength is obtained. When the stretching magnification is not within the range of 1.1 to 3.0 times, there is a case where the effect of improving mechanical strength cannot be sufficiently obtained. Further, the stretching magnifications in two axial directions may be the same or different from each other. The stretching temperature is usually the glass transition temperature TgB (°C) of the thermoplastic resin (B) or higher, preferably TgB+25 (°C) to TgB+85 (°C), and more preferably TgB+30 (°C) to TgB+60 (°C). When the stretching temperature is lower than TgB+25 (°C), a fracture may be generated in the film and the haze may be increased. Further, when the stretching temperature is higher than TgB+85 (°C), outer appearance may be deteriorated due to flow of the resin, and therefore it is impractical. The stretching rate in the stretching direction is preferably 0.1 to 3.0 m/min. When the stretching rate is lower than 0.1 m/min, it is difficult to obtain high stretching strength, and in addition, it takes time to obtain a sufficient stretching magnification, and the productivity is not sufficient. When the stretching rate is higher than 3.0 m/min, a fracture or uneven thickness may be caused in the film.

The thickness of the stretched multilayer thermoplastic resin film of the present invention is preferably 10 to 1000 μm, and more preferably 20 to 200 μm. When the thickness is less than 10 μm, in the case of the production by means of extrusion molding, poor thickness precision is often caused and a fracture or the like tends to be easily generated at the time of stretching, and as a result, the probability of failure of the production becomes high. When the thickness is more than 1000 μm, it takes time to carry out stretching and the effect of improving mechanical physical properties is small, and therefore it is impractical. The thickness of the stretched multilayer thermoplastic resin film of the present invention can be adjusted by adjusting the film forming rate, thickness of a discharge port of a T-die, roll gap, etc. at the time of forming of a raw film, or by adjusting the stretching magnification at the time of stretching.

In the stretched multilayer thermoplastic resin film of the present invention, the ratio of the thickness of the layer containing the thermoplastic resin (B) (i.e., the sum of two layers on both the surfaces of the (A) layer) to the total thickness of the layer containing the thermoplastic resin (A) and the layer containing the thermoplastic resin (B) (i.e., the sum of three layers, the (B) layer/the (A) layer/the (B) layer) is preferably 5 to 70%. When the thickness of the layer containing the thermoplastic resin (B) is less than 5%, dimensional change of the stretched multilayer thermoplastic resin film obtained under high-humidity conditions increases, and in addition, at the time of water or moisture absorption, a crack may be generated in the layer containing the thermoplastic resin (B) since the mechanical strength of the layer containing the thermoplastic resin (B) cannot endure dimensional change of the layer containing the thermoplastic resin (A). When the thickness of the layer containing the thermoplastic resin (B) is more than 70%, the effect of suppressing dimensional change is small, and in addition, there is a case where the mechanical strength tends to become poor depending on raw film forming conditions and stretching conditions. More preferably, the ratio of the thickness of the layer containing the thermoplastic resin (B) to the total thickness of the layer containing the thermoplastic resin (A) and the layer containing the thermoplastic resin (B) is 5 to 50%.

Any one or more of a hard coat treatment, an antireflection treatment, an antifouling treatment, an antistatic treatment, a weather resistance treatment and an anti-glare treatment can be performed on one surface or both surfaces of the stretched multilayer thermoplastic resin film of the present invention. The methods for these treatments are not particularly limited, and publicly-known methods can be used. Examples thereof include a method of applying a thermosetting or photocurable film, a method of applying a reflection-reducing paint, a method of depositing a dielectric thin film and a method of applying an antistatic paint. A publicly-known coating agent can be used, and examples thereof include organic coating agents such as melamine resin, urethane resin, acrylic resin and UV curable acrylic resin, silicon-based coating agents such as a silane compound, inorganic coating agents such as a metal oxide, and organic-inorganic hybrid coating agents.

The in-plane retardation Re of the stretched multilayer thermoplastic resin film of the present invention at a wavelength of 590 nm is preferably 0.0 to 3.0 nm, and more preferably 0.0 to 1.0 nm. Further, the thickness direction retardation Rth of the stretched multilayer thermoplastic resin film of the present invention at a wavelength of 590 nm is preferably -10.0 to 10.0 nm, and more preferably -6.0 to 6.0 nm. Re and Rth can be obtained by the measurement of in-plane principal refractive indices, nx and ny (with the proviso that nx>ny) and principal refractive index in the thickness direction nz and calculation according to the below-described formula.

$$Re=(nx-ny)\times d \text{ (d: film thickness)}$$

$$Rth=((nx+ny)/2-nz)\times d$$

EXAMPLES

Hereinafter, the present invention will be described in detail by way of the Examples, but the present invention is not limited by the Examples and Comparative Examples. The stretched multilayer thermoplastic resin films obtained in the Examples and Comparative Examples were evaluated as described below.

<Hydrogenation reaction rate of copolymer>

Regarding the thermoplastic resins obtained in Synthesis Examples described below, the hydrogenation reaction rate was obtained based on the decrease ratio of absorption at 260 nm in the UV spectrum measurement before and after hydrogenation reaction. Using the absorbance A1 in the case of the concentration C1 of resin before hydrogenation reaction and the absorbance A2 in the case of the concentration C2 of resin after hydrogenation reaction, calculation was carried out according to the below-described formula.

$$\text{Hydrogenation reaction rate (\%)}=100\times[1-(A2\times C1)/(A1\times C2)]$$

<Intrinsic birefringence value>

Regarding the thermoplastic resins obtained in Synthesis Examples described below, the difference in dielectric polarization of bonding units of respective structural units was calculated according to the molecular orbital method, and as a volume average value thereof, an intrinsic birefringence value was calculated according to the below-described Lorentz-Lorenz equation.

$$\Delta n_0=2/9\pi\times(n^2+2)^2/n\times\Delta P\cdot d\cdot N/M$$

($\Delta n_0$: intrinsic birefringence value, $\Delta P$: difference between dielectric polarization in the direction of molecular chain axis and dielectric polarization in the direction perpendicular to the molecular chain axis, n: refractive index, d: density, N: Avogadro's number, M: molecular weight)

<Evaluation of continuous productivity>

In the preparation of the raw material films of the Examples and Comparative Examples described below, molding was continuously performed for 6 hours, and after that, the surfaces of mirror surface rolls were visually observed. The case where contamination derived from bleeding out of an additive was not caused on the surfaces of the mirror surface rolls was regarded as "passed" (○), and the other cases were regarded as "failed" (×).

<Thickness>

The stretched multilayer thermoplastic resin films obtained in the Examples and Comparative Examples described below were measured using a digital micrometer (manufactured by Sony Magnescale Co., Ltd., M-30). The average of 10 measurement points of the obtained stretched multilayer thermoplastic resin film was regarded as the thickness of the film.

<Evaluation of adhesion>

Regarding the stretched multilayer thermoplastic resin films obtained in the Examples and Comparative Examples described below, a test piece with a size of 100 mm×300 mm was obtained by cutting, the test piece was pressed to a cylinder having a diameter of 80 mm so that the long side was in the circumferential direction, and the presence or absence of detachment of the interface between laminated resins was evaluated. The case where detachment was caused in 2 or less out of 10 pieces was regarded as "passed" (○), and the other cases were regarded as "failed" (×).

<Evaluation of transparency>

Regarding the stretched multilayer thermoplastic resin films obtained in the Examples and Comparative Examples described below, the haze was measured using a colorimeter COH-400 manufactured by Nippon Denshoku Industries Co., Ltd. in accordance with JIS K 7105 and ASTM D1003. The case where the haze was 1.0% or less was regarded as "passed" (○), and the other cases were regarded as "failed" (×).

<Evaluation of optical isotropy>

Regarding the stretched multilayer thermoplastic resin films obtained in the Examples and Comparative Examples described below, a slow phase axis was detected at a measurement wavelength of 590 nm using a spectroscopic ellipsometer (manufactured by JASCO Corporation, M-220), and in-plane principal refractive indices, nx and ny (with the proviso that nx>ny) and a principal refractive index in the thickness direction nz, at a wavelength of 590 nm, were measured with the three-dimensional refractive index measurement mode (tilt angle: -8 to 8°). The in-plane retardation Re and the thickness direction retardation Rth were calculated according to the below-described formula. The case where the in-plane retardation Re was within the range of 0.0 to 3.0 nm was regarded as "passed" (○), and the other cases were regarded as "failed" (×). Further, the case where the thickness direction retardation Rth was within the range of -10.0 to 10.0 nm was regarded as "passed" (○), and the other cases were regarded as "failed" (×).

$$Re=(nx-ny)\times d \text{ (d: film thickness)}$$

$$Rth=((nx+ny)/2-nz)\times d$$

<Evaluation of mechanical strength (folding resistance)>

Regarding the stretched multilayer thermoplastic resin films obtained in the Examples and Comparative Examples described below, the number of times of folding until a fracture was generated was measured with a folding angle of 135° to the left and right from the center, a load of 500 g and a rate of 180 times/min using an MIT type folding endurance tester (manufactured by Toyo Seiki Seisaku-sho, Ltd.) in accordance with JIS P 8115. The case where the number of times of folding until a fracture was generated was 100 times or more was regarded as "passed" (○), and the other cases were regarded as "failed" (×).

<Evaluation of punching properties>

Regarding the stretched multilayer thermoplastic resin films obtained in the Examples and Comparative Examples described below, each film was pressed and cut at a cutting speed of 145 spm using Super Cutter PJ1-0600 (razor blade) manufactured by Ogino Seiki Co., Ltd. After that, the pressed/cut surface of the film was observed from the direction of blade insertion using a digital microscope MXG-2500REZ (magnification x100) manufactured by HIROX Co., Ltd. The case where the size of a crack and delamination generated in the cut surface was 10 μm or less was regarded as "passed" (○), and the other cases were regarded as "failed" (×).

<Evaluation of dimensional stability>

Regarding the stretched multilayer thermoplastic resin films obtained in the Examples and Comparative Examples described below, a test piece which was left at 23°C and at a relative humidity of 50% for 24 hours or longer was cut into a size of 120 mm×120 mm. A reference line (100 mm) was drawn in the extrusion direction (MD) and the direction perpendicular to the extrusion direction (TD) of the test piece, and the average value of the lengths of the reference lines drawn in the MD direction and the TD direction was regarded as the initial size. The test piece was held at 85°C and at a humidity of 85%RH for 48 hours. The lengths of the reference lines drawn in the MD direction and the TD direction of the test piece taken out were measured again, and the average value thereof was regarded as the size after the test. The dimensional change rate was calculated using the below-described formula. The case where dimensional change at 85°C and 85%RH was -0.0 to -5.0% (shrank) was regarded as "passed" (○), and the other cases were regarded as "failed" (×).

$$\text{Dimensional change rate (\%)}=((\text{size after test}-\text{initial size})/\text{initial size})\times 100$$

Synthesis Example 1 [Production of vinyl copolymer resin (B1)]

A monomer composition consisting of 77.0 mol% of purified methyl methacrylate (manufactured by Mitsubishi Gas Chemical Company, Inc.), 23.0 mol% of purified styrene (manufactured by Wako Pure Chemical Industries, Ltd.) and 0.002 mol% of t-amyl peroxy-2-ethylhexanoate (manufactured by Arkema Yoshitomi, Ltd., trade name: Luperox 575) as a polymerization initiator was continuously fed to a 10-L complete mixing bath equipped with a helical ribbon impeller at a feed rate of 1 kg/h, and the monomer composition was continuously polymerized at a polymerization temperature of 150°C for an average retention time of 2.5 hours. The reaction mixture was continuously removed through the bottom of the polymerization bath so that the liquid surface in the bath became constant, and it was introduced into a solvent-removing apparatus, thereby obtaining a vinyl copolymer resin (B1') in a pellet form.

The obtained vinyl copolymer resin (B1') was dissolved in methyl isobutylate (manufactured by Kanto Chemical Co., Inc.), thereby preparing a 10 wt% solution of methyl isobutylate. To a 1000-mL autoclave, 500 parts by weight of the 10 wt% solution of methyl isobutylate containing (B1') and 1 part by weight of 10 wt% Pd/C (manufactured by N.E. Chemcat Corporation) were fed, and the mixture was maintained under a hydrogen pressure of 9 MPa at 200°C for 15 hours, thereby hydrogenating a benzene ring moiety. The catalyst was removed using a filter, and the filtrate was introduced into a solvent-removing apparatus, thereby obtaining a vinyl copolymer resin (B1) in a pellet form. According to the $^1$H-NMR measurement, the ratio of the methyl methacrylate structural unit was 75 mol%, and according to the measurement of absorbance at a wavelength of 260 nm, the hydrogenation reaction rate of the benzene ring moiety was 99%. The glass transition temperature of the obtained vinyl copolymer resin (B1) was 120°C, and the saturated water absorption rate was 0.9 wt%. Further, the intrinsic birefringence of the obtained vinyl copolymer resin (B1) was -0.0003.

Synthesis Example 2 [Production of vinyl copolymer resin (B2)]

A vinyl copolymer resin (B2) was obtained in a manner similar to that in Synthesis Example 1, except that the amount of the methyl methacrylate used in Synthesis Example 1 was changed to 62.0 mol% and the amount of the styrene was changed to 38.0 mol%. According to the $^1$H-NMR measurement, the ratio of the methyl methacrylate structural unit was 60 mol%, and according to the measurement of absorbance at a wavelength of 260 nm, the hydrogenation reaction rate of the benzene ring moiety was 99%. The glass transition temperature of the obtained vinyl copolymer resin (B2) was 120°C, and the saturated water absorption rate was 0.6 wt%. Further, the intrinsic birefringence of the obtained vinyl copolymer resin (B2) was +0.0021.

Synthesis Example 3 [Production of vinyl copolymer resin (B3)]

A vinyl copolymer resin (B3) was obtained in a manner similar to that in Synthesis Example 1, except that the amount of the methyl methacrylate used in Synthesis Example 1 was changed to 32.0 mol% and the amount of the styrene was changed to 68.0 mol%. According to the $^1$H-NMR measurement, the ratio of the methyl methacrylate structural unit was 30 mol%, and according to the measurement of absorbance at a wavelength of 260 nm, the hydrogenation reaction rate of the benzene ring moiety was 99%. The glass transition temperature of the obtained vinyl copolymer resin (B3) was 123°C, and the saturated water absorption rate was 0.4 wt%. Further, the intrinsic birefringence of the obtained vinyl copolymer resin (B3) was +0.0069.

Synthesis Example 4 [Production of vinyl copolymer resin (B4)]

A vinyl copolymer resin (B4) was obtained in a manner similar to that in Synthesis Example 1, except that the amount of the methyl methacrylate used in Synthesis Example 1 was changed to 92.0 mol% and the amount of the styrene was changed to 8.0 mol%. According to the $^1$H-NMR measurement, the ratio of the methyl methacrylate structural unit was 90 mol%, and according to the measurement of absorbance at a wavelength of 260 nm, the hydrogenation reaction rate of the benzene ring moiety was 99%. The glass transition temperature of the obtained vinyl copolymer resin (B4) was 112°C, and the saturated water absorption rate was 1.3 wt%. Further, the intrinsic birefringence of the obtained vinyl copolymer resin (B4) was -0.0027.

Synthesis Example 5 [Production of vinyl copolymer resin (B5)]

A vinyl copolymer resin (B5) was obtained in a manner similar to that in Synthesis Example 1, except that the reaction time for hydrogenation of the benzene ring moiety was changed to 5 hours. According to the $^1$H-NMR measurement, the ratio of the methyl methacrylate structural unit was 75 mol%, and according to the measurement of absorbance at a wavelength of 260 nm, the hydrogenation reaction rate of the benzene ring moiety was 82%. The glass transition temperature of the obtained vinyl copolymer resin (B5) was 116°C, and the saturated water absorption rate was 0.9 wt%. Further, the intrinsic birefringence of the obtained vinyl copolymer resin (B5) was -0.0055.

Synthesis Example 6 [Production of elastic particles]

300 parts by weight of ion-exchanged water, 1.0 part by weight of sodium stearate and 0.08 part by weight of N-sodium lauroyl sarcosinate were put into a reaction container equipped with a reflux cooling apparatus, the mixture was heated to 70°C under nitrogen atmosphere while stirring, and a monomer mixture consisting of 50 parts by weight of methyl methacrylate, 2 parts by weight of methyl acrylate and 0.15 part by weight of allyl methacrylate was added thereto. Subsequently, 0.6 part by weight of 10% aqueous solution of potassium persulfate was added thereto, and the mixture was heated to 80°C and held for 60 minutes.

Subsequently, 0.3 part by weight of 10% aqueous solution of potassium persulfate was added thereto in the presence of the latex, and a monomer mixture consisting of 28.0 parts by weight of butyl acrylate, 5.8 parts by weight of styrene and 0.8 part by weight of allyl methacrylate was continuously added thereto over 60 minutes. After the addition was completed, the mixture was held for 30 minutes.

Subsequently, 0.3 part by weight of 10% aqueous solution of potassium persulfate was added thereto in the presence of the latex, and a monomer mixture consisting of 29 parts by weight of methyl methacrylate, 1 part by weight of methyl acrylate and 0.06 part by weight of n-octyl mercaptan was continuously added thereto over 30 minutes. After the addition was completed, the mixture was held for 60 minutes, thereby obtaining a three-layer structured polymer latex.

The latexes obtained by sampling during polymerization and at the time of the completion of polymerization were observed using a scanning electron microscope to obtain the average particle diameter, and it was 0.17 μm when including only the innermost layer, 0.20 μm when including the innermost layer and the intermediate layer, and 0.21 μm when including the innermost layer, the intermediate layer and the outermost layer.

The latexes thus obtained were put into a stainless steel container, frozen, and melted at 70°C. After that, the polymer was separated by filtration. In addition, it was subjected to washing with hot water at 70°C and dehydration three times and then dried at 80°C for 10 hours, thereby obtaining multilayer elastic particles.

Production Example 1 [Production of thermoplastic resin composition (A1)]

95 parts by weight of methyl methacrylate (SUMIPEX MG5 manufactured by Sumitomo Chemical Co., Ltd. (intrinsic birefringence: -0.0043, glass transition temperature: 105°C)), 5 parts by weight of elastic particles obtained in Synthesis Example 6 and 1.2 parts by weight of a triazine-based ultraviolet absorber (ADK STAB LA-F70 manufactured by ADEKA Corporation) were continuously introduced into a twin screw extruder having a screw diameter of 30 mm and extruded at a cylinder temperature of 250°C and a discharge rate of 25 kg/hour, thereby obtaining a thermoplastic resin composition (A1) in which the ultraviolet absorber was added to methyl methacrylate.

Production Example 2 [Production of thermoplastic resin composition (A2)]

A thermoplastic resin composition (A2) was obtained in a manner similar to that in Production Example 1, except that the amount of methyl methacrylate (SUMIPEX MG5 manufactured by Sumitomo Chemical Co., Ltd. (intrinsic birefringence: -0.0043, glass transition temperature: 105°C)) of Production Example 1 was changed to 80 parts by weight, and that the amount of the elastic particles obtained in Synthesis Example 6 was changed to 20 parts by weight.

Production Example 3 [Production of thermoplastic resin composition (A3)]

A thermoplastic resin composition (A3) was obtained in a manner similar to that in Production Example 1, except that the amount of methyl methacrylate (SUMIPEX MG5 manufactured by Sumitomo Chemical Co., Ltd. (intrinsic birefringence: -0.0043, glass transition temperature: 105°C)) of Production Example 1 was changed to 60 parts by weight, and that the amount of the elastic particles obtained in Synthesis Example 6 was changed to 40 parts by weight.

Production Example 4 [Production of thermoplastic resin composition (A4)]

A thermoplastic resin composition (A4) was obtained in a manner similar to that in Production Example 1, except that the amount of methyl methacrylate (SUMIPEX MG5 manufactured by Sumitomo Chemical Co., Ltd. (intrinsic birefringence: -0.0043, glass transition temperature: 105°C)) of Production Example 1 was changed to 100 parts by weight, and that the amount of the elastic particles obtained in Synthesis Example 6 was changed to 0 part by weight.

Production Example 5 [Production of thermoplastic resin composition (A5)]

A thermoplastic resin composition (A5) was obtained in a manner similar to that in Production Example 1, except that the amount of methyl methacrylate (SUMIPEX MG5 manufactured by Sumitomo Chemical Co., Ltd. (intrinsic birefringence: -0.0043, glass transition temperature: 105°C)) of Production Example 1 was changed to 50 parts by weight, and that the amount of the elastic particles obtained in Synthesis Example 6 was changed to 50 part by weight.

Production Example 6 [Production of vinyl copolymer resin composition (B6)]

A vinyl copolymer resin composition (B6) was obtained in a manner similar to that in Production Example 4, except that the vinyl copolymer resin (B1) obtained in Synthesis Example 1 was introduced instead of methyl methacrylate (SUMIPEX MG5 manufactured by Sumitomo Chemical Co., Ltd. (intrinsic birefringence: -0.0043, glass transition temperature: 105°C)) used in Production Example 4.

Production Example 7 [Production of vinyl copolymer resin composition (B7)]

A vinyl copolymer resin composition (B7) was obtained in a manner similar to that in Production Example 4, except that the vinyl copolymer resin (B2) obtained in Synthesis Example 2 was introduced instead of methyl methacrylate (SUMIPEX MG5 manufactured by Sumitomo Chemical Co., Ltd. (intrinsic birefringence: -0.0043, glass transition temperature: 105°C)) used in Production Example 4.

Example 1 [Resin (B1)/resin (A1)/resin (B1), layer ratio 1:3:1]

A laminate was molded using a multilayer extruder having a single screw extruder with a screw diameter of 32 mm, a single screw extruder with a screw diameter of 65 mm, a feed block connected to all the extruders and a T-die connected to the feed block. The vinyl copolymer resin (B1) obtained in Synthesis Example 1 was continuously introduced into the single screw extruder with the screw diameter of 32 mm and extruded at a cylinder temperature of 250°C and a discharge rate of 20.0 kg/hour. Further, the thermoplastic resin composition (A1) obtained in Production Example 1 was continuously introduced into the single screw extruder with the screw diameter of 65 mm and extruded at a cylinder temperature of 250°C and a discharge rate of 30.0 kg/hour. The feed block connected to all the extruders had a distribution pin for two types of three layers, and the thermoplastic resin composition (A1) and the vinyl copolymer resin (B1) were introduced into it at 250°C to perform lamination. The laminated product was extruded into a sheet shape with the T-die connected to the feed block at 250°C, and it was cooled using 3 mirror surface rolls each at 110°C, 95°C and 90°C from the upstream side, thereby obtaining a raw film in which the vinyl copolymer resin (B1) was laminated on both the surfaces of the thermoplastic resin composition (A1). The thickness of the obtained raw film was 140 μm. The obtained raw film was biaxially stretched using a fixed end simultaneous biaxial stretching machine. The stretching temperature was set at 160°C, the preheating time was sufficiently provided, the stretching rate was 300 mm/min, the stretching magnifications were 1.85 times (vertical) and 1.85 times (horizontal), and thus a stretched multilayer thermoplastic resin film was prepared. The thickness of the obtained stretched multilayer thermoplastic resin film was 40 μm, and the thicknesses of the respective layers near the center thereof were (B1)/(A1)/(B1)=8 μm/24 μm/8 μm. The evaluation results regarding continuous productivity, adhesion, transparency, optical isotropy, mechanical strength, punching properties and dimensional stability were all good, and the synthetic judgement was "passed" (○).

Example 2 [Resin (B1)/resin (A2)/resin (B1), layer ratio 1:3:1]

The vinyl copolymer resin (B1) was laminated on both the surfaces of the thermoplastic resin composition (A2) and the obtained product was stretched, thereby obtaining a stretched multilayer thermoplastic resin film in a manner similar to that in Example 1, except that the thermoplastic resin composition (A2) obtained in Production Example 2 was introduced instead of the thermoplastic resin composition (A1) used in Example 1. The thickness of the obtained stretched multilayer thermoplastic resin film was 40 μm, and the thicknesses of the respective layers near the center thereof were (B1)/(A2)/(B1)=8 μm/24 μm/8 μm. The evaluation results regarding continuous productivity, adhesion, transparency, optical isotropy, mechanical strength, punching properties and dimensional stability were all good, and the synthetic judgement was "passed" (○).

Example 3 [Resin (B1)/resin (A3)/resin (B1), layer ratio 1:3:1]

The vinyl copolymer resin (B1) was laminated on both the surfaces of the thermoplastic resin composition (A3) and the obtained product was stretched, thereby obtaining a stretched multilayer thermoplastic resin film in a manner similar to that in Example 1, except that the thermoplastic resin composition (A3) obtained in Production Example 3 was introduced instead of the thermoplastic resin composition (A1) used in Example 1. The thickness of the obtained stretched multilayer thermoplastic resin film was 40 μm, and the thicknesses of the respective layers near the center thereof were (B1)/(A3)/(B1)=8 μm/24 μm/8 μm. The evaluation results regarding continuous productivity, adhesion, transparency, optical isotropy, mechanical strength, punching properties and dimensional stability were all good, and the synthetic judgement was "passed" (○).

Example 4 [Resin (B2)/resin (A2)/resin (B2), layer ratio 1:3:1]

The vinyl copolymer resin (B2) was laminated on both the surfaces of the thermoplastic resin composition (A2) and the obtained product was stretched, thereby obtaining a stretched multilayer thermoplastic resin film in a manner similar to that in Example 2, except that the vinyl copolymer resin (B2) obtained in Synthesis Example 2 was introduced instead of the vinyl copolymer resin (B1) used in Example 2. The thickness of the obtained stretched multilayer thermoplastic resin film was 40 μm, and the thicknesses of the respective layers near the center thereof were (B2)/(A2)/(B2)=8 μm/24 μm/8 μm. The evaluation results regarding continuous productivity, adhesion, transparency, optical isotropy, mechanical strength, punching properties and dimensional stability were all good, and the synthetic judgement was "passed" (○).

Comparative Example 1 [Resin (B1)/resin (A4)/resin (B1), layer ratio 1:3:1]

The vinyl copolymer resin (B1) was laminated on both the surfaces of the thermoplastic resin composition (A4) and the obtained product was stretched, thereby obtaining a stretched multilayer thermoplastic resin film in a manner similar to that in Example 1, except that the thermoplastic resin composition (A4) obtained in Production Example 4 was introduced instead of the thermoplastic resin composition (A1) used in Example 1. The thickness of the obtained stretched multilayer thermoplastic resin film was 40 μm, and the thicknesses of the respective layers near the center thereof were (B1)/(A4)/(B1)=8 μm/24 μm/8 μm. The evaluation results regarding continuous productivity, adhesion, transparency, optical isotropy, mechanical strength and dimensional stability were all good, but the evaluation result regarding punching properties was poor. The synthetic judgement was "failed" (×).

Comparative Example 2 [Resin (B1)/resin (A5)/resin (B1), layer ratio 1:3:1]

The vinyl copolymer resin (B1) was laminated on both the surfaces of the thermoplastic resin composition (A5) and the obtained product was stretched, thereby obtaining a stretched multilayer thermoplastic resin film in a manner similar to that in Example 1, except that the thermoplastic resin composition (A5) obtained in Production Example 5 was introduced instead of the thermoplastic resin composition (A1) used in Example 1. The thickness of the obtained stretched multilayer thermoplastic resin film was 40 μm, and the thicknesses of the respective layers near the center thereof were (B1)/(A5)/(B1)=8 μm/24 μm/8 μm. The evaluation results regarding continuous productivity, adhesion, mechanical strength and punching properties were good, but the evaluation results regarding transparency, optical isotropy and dimensional stability were poor. The synthetic judgement was "failed" (×).

Comparative Example 3 [Resin (B3)/resin (A2)/resin (B3), layer ratio 1:3:1]

The vinyl copolymer resin (B3) was laminated on both the surfaces of the thermoplastic resin composition (A2)

and the obtained product was stretched, thereby obtaining a stretched multilayer thermoplastic resin film in a manner similar to that in Example 2, except that the vinyl copolymer resin (B3) obtained in Synthesis Example 3 was introduced instead of the vinyl copolymer resin (B1) used in Example 2. The thickness of the obtained stretched multilayer thermoplastic resin film was 40 μm, and the thicknesses of the respective layers near the center thereof were (B3)/(A2)/(B3)=8 μm/24 μm/8 μm. The evaluation results regarding continuous productivity, transparency, optical isotropy, mechanical strength and dimensional stability were good, but the evaluation results regarding adhesion and punching properties were poor. The synthetic judgement was "failed" (×).

Comparative Example 4 [Resin (B4)/resin (A2)/resin (B4), layer ratio 1:3:1]

The vinyl copolymer resin (B4) was laminated on both the surfaces of the thermoplastic resin composition (A2) and the obtained product was stretched, thereby obtaining a stretched multilayer thermoplastic resin film in a manner similar to that in Example 2, except that the vinyl copolymer resin (B4) obtained in Synthesis Example 4 was introduced instead of the vinyl copolymer resin (B1) used in Example 2. Roll contamination did not occur at the time of continuous molding of the raw film. The thickness of the obtained stretched multilayer thermoplastic resin film was 40 μm, and the thicknesses of the respective layers near the center thereof were (B4)/(A2)/(B4)=8 μm/24 μm/8 μm. The evaluation results regarding continuous productivity, adhesion, transparency, optical isotropy, mechanical strength and punching properties were good, but the evaluation result regarding dimensional stability was poor. The synthetic judgement was "failed" (×).

Comparative Example 5 [Resin (B5)/resin (A2)/resin (B5), layer ratio 1:3:1]

The vinyl copolymer resin (B5) was laminated on both the surfaces of the thermoplastic resin composition (A2) and the obtained product was stretched, thereby obtaining a stretched multilayer thermoplastic resin film in a manner similar to that in Example 2, except that the vinyl copolymer resin (B5) obtained in Synthesis Example 5 was introduced instead of the vinyl copolymer resin (B1) used in Example 2. Roll contamination did not occur at the time of continuous molding of the raw film. The thickness of the obtained stretched multilayer thermoplastic resin film was 40 μm, and the thicknesses of the respective layers near the center thereof were (B5)/(A2)/(B5)=8 μm/24 μm/8 μm. The evaluation results regarding continuous productivity, adhesion, transparency, mechanical strength, punching properties and dimensional stability were good, but the evaluation result regarding optical isotropy was poor. The synthetic judgement was "failed" (×).

Comparative Example 6 [Resin (A4)]

A single layer body was molded using a single layer extruder having a single screw extruder with a screw diameter of 65 mm and a T-die connected to the extruder. The thermoplastic resin composition (A4) obtained in Production Example 4 was continuously introduced into the single screw extruder and extruded at a cylinder temperature of 250°C and a discharge rate of 50.0 kg/hour. The product was extruded into a sheet shape with the T-die connected to the extruder at 250°C, and it was cooled using 3 mirror surface rolls each at 90°C, 82°C and 105°C from the upstream side, thereby obtaining a raw film of the thermoplastic resin composition (A4). The thickness of the obtained raw film was 140 μm. Roll contamination occurred at the time of continuous molding of the raw film. The obtained raw film was biaxially stretched using a fixed end simultaneous biaxial stretching machine. The stretching temperature was set at 150°C, the preheating time was sufficiently provided, the stretching rate was 300 mm/min, the stretching magnifications were 1.85 times (vertical) and 1.85 times (horizontal), and thus a stretched film of the thermoplastic resin composition (A4) was prepared. The thickness of the obtained stretched film of the thermoplastic resin composition (A4) was 40 μm. The evaluation results regarding transparency and mechanical strength were good, but the evaluation results regarding continuous productivity, punching properties and dimensional stability were poor. The synthetic judgement was "failed" (×).

Comparative Example 7 [Resin (B6)]

A stretched film of the vinyl copolymer resin composition (B6) was obtained in a manner similar to that in Comparative Example 6, except that the vinyl copolymer resin composition (B6) obtained in Production Example 6 was introduced instead of the thermoplastic resin composition (A4) used in Comparative Example 6, and that the stretching temperature was set at 160°C. The thickness of the obtained stretched film of the thermoplastic resin composition (B6) was 40 μm. The evaluation results regarding transparency, optical isotropy, mechanical strength and dimensional stability were good, but the evaluation results regarding continuous productivity and punching properties were poor. The synthetic judgement was "failed" (×).

Comparative Example 8 [Resin (B7)]

A stretched film of the vinyl copolymer resin composition (B7) was obtained in a manner similar to that in Comparative Example 6, except that the vinyl copolymer resin composition (B7) obtained in Production Example 7 was introduced instead of the thermoplastic resin composition (A4) used in Comparative Example 6, and that the stretching temperature was set at 160°C. The thickness of the obtained stretched film of the vinyl copolymer resin composition (B7) was 40 μm. The evaluation results regarding transparency, optical isotropy, mechanical strength and dimensional stability were good, but the evaluation results regarding continuous productivity and punching properties were poor. The synthetic judgement was "failed" (×).

Comparative Example 9 [Resin (A2)]

A stretched film of the thermoplastic resin composition (A2) was obtained in a manner similar to that in Comparative Example 6, except that the thermoplastic resin composition (A2) obtained in Production Example 2 was introduced instead of the thermoplastic resin composition (A4) used in Comparative Example 6. The thickness of the obtained stretched film of the thermoplastic resin composition (A2) was 40 μm. The evaluation results regarding mechanical strength and punching properties were good, but the evaluation results regarding continuous productivity, transparency, optical isotropy and dimensional stability were poor. The synthetic judgement was "failed" (×).

Table 1

| | Constitution | | Evaluation of continuous productivity | Evaluation of adhesion | Evaluation of transparency | Evaluation of optical isotropy | | Evaluation of mechanical strength | Evaluation of punching properties | Evaluation of dimensional stability | Synthetic judgement |
|---|---|---|---|---|---|---|---|---|---|---|---|
| | Core layer | Skin layer | | | Haze (%) | Re (nm) | Rth (nm) | Number of times of folding endurance | | 85°C 85%RH | |
| Example 1 | Resin (A1) | Resin (B1) | ○ | ○ 0/10 | ○ 0.1 | ○ 0.4 | ○ -4.2 | ○ 200 | ○ | ○ -1.10% | ○ |
| Example 2 | Resin (A2) | Resin (B1) | ○ | ○ 0/10 | ○ 0.4 | ○ 0.4 | ○ -5.0 | ○ 300 | ○ | ○ -1.15% | ○ |
| Example 3 | Resin (A3) | Resin (B1) | ○ | ○ 0/10 | ○ 0.8 | ○ 1.0 | ○ -6.0 | ○ 360 | ○ | ○ -1.20% | ○ |
| Example 4 | Resin (A2) | Resin (B2) | ○ | ○ 1/10 | ○ 0.4 | ○ 1.0 | ○ -5.0 | ○ 290 | ○ | ○ -1.00% | ○ |
| Comparative Example 1 | Resin (A4) | Resin (B1) | ○ | ○ 0/10 | ○ 0.1 | ○ 0.4 | ○ -4.0 | ○ 170 | × | ○ -1.10% | × |
| Comparative Example 2 | Resin (A5) | Resin (B1) | ○ | ○ 0/10 | × 1.6 | ○ 1.0 | × -15.5 | ○ 400 | ○ | × -1.50% | × |
| Comparative Example 3 | Resin (A2) | Resin (B3) | ○ | × 5/10 | ○ 0.4 | ○ 1.0 | ○ -5.2 | ○ 300 | × | ○ -1.10% | × |
| Comparative Example 4 | Resin (A2) | Resin (B4) | ○ | ○ 0/10 | ○ 0.4 | ○ 1.0 | ○ -9.5 | ○ 270 | ○ | × -10.50% | × |
| Comparative Example 5 | Resin (A2) | Resin (B5) | ○ | ○ 0/10 | ○ 0.4 | × 4.5 | × -48.5 | ○ 250 | ○ | ○ -4.80% | × |
| Comparative Example 6 | Resin (A4) | | × | - | ○ 0.1 | ○ 1.0 | × -10.3 | ○ 202 | × | × -14.72% | × |
| Comparative Example 7 | Resin (B6) | | × | - | ○ 0.1 | ○ 1.0 | ○ -2.4 | ○ 180 | × | ○ -0.70% | × |
| Comparative Example 8 | Resin (B7) | | × | - | ○ 0.1 | ○ 1.0 | ○ -2.0 | ○ 160 | × | ○ -0.60% | × |

(continued)

| | Constitution | | Evaluation of continuous productivity | Evaluation of adhesion | Evaluation of transparency | Evaluation of optical isotropy | | Evaluation of mechanical strength | Evaluation of punching properties | Evaluation of dimensional stability | Synthetic judgement |
|---|---|---|---|---|---|---|---|---|---|---|---|
| | Core layer | Skin layer | | | Haze (%) | Re (nm) | Rth (nm) | Number of times of folding endurance | | 85°C 85%RH | |
| Comparative Example 9 | Resin (A2) | | × | - | × 2.0 | ○ 1.0 | × -12.5 | ○ 310 | ○ | × -18.00% | × |

## Claims

1. A stretched multilayer thermoplastic resin film which comprises layers containing a thermoplastic resin (B) on both surfaces of a layer that contains a thermoplastic resin (A) and elastic particles, wherein:

respective intrinsic birefringences of the thermoplastic resin (A) and the thermoplastic resin (B), calculated as disclosed in the description, are within the range of from -0.005 to 0.005;
a content ratio of the elastic particles in the whole layer containing the thermoplastic resin (A) and the elastic particles is 5 to 40% by weight;
a glass transition temperature of the thermoplastic resin (B), determined as disclosed in the description, is 110°C or higher;
and a saturated water absorption rate of the thermoplastic resin (B), determined as disclosed in the description, is less than 1.1 wt%;
and wherein the thermoplastic resin (B) comprises a (meth)acrylic acid ester structural unit (a) represented by general formula (1) below:

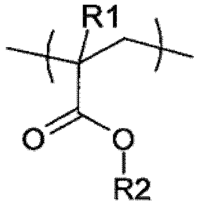
(1)

(wherein R1 represents a hydrogen atom or a methyl group, and R2 represents a $C_1$-$C_{16}$ hydrocarbon group), and an aliphatic vinyl structural unit (b) represented by general formula (2) below:

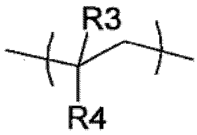
(2)

(wherein R3 represents a hydrogen atom or a methyl group, and R4 represents a cyclohexyl group or a cyclohexyl group having a $C_1$-$C_4$ hydrocarbon substituent), and wherein a ratio of the sum of the (meth)acrylic acid ester structural unit (a) and the aliphatic vinyl structural unit (b) is 90 to 100 mol% relative to the sum of all the structural units in the thermoplastic resin (B), and wherein a molar ratio between the (meth)acrylic acid ester structural unit (a) and the aliphatic vinyl structural unit (b) is 55:45 to 85:15.

2. The stretched multilayer thermoplastic resin film according to claim 1, which has an in-plane retardation Re of 0.0 to 3.0 nm and a thickness direction retardation Rth of -10.0 to 10.0 nm at a wavelength of 590 nm.

3. The stretched multilayer thermoplastic resin film according to claim 1, wherein each of R1 and R2 in general formula (1) is a methyl group.

4. The stretched multilayer thermoplastic resin film according to claim 1 or 2, wherein R4 in general formula (2) is a cyclohexyl group.

5. The stretched multilayer thermoplastic resin film according to any one of claims 1 to 4, wherein the elastic particles comprise a methyl methacrylate structural unit and an acrylic acid alkyl ester structural unit.

6. The stretched multilayer thermoplastic resin film according to any one of claims 1 to 5, wherein the stretched film is a biaxially stretched film.

7. The stretched multilayer thermoplastic resin film according to any one of claims 1 to 6, wherein a magnification of stretching in at least one stretching direction is 1.1 to 3.0 times.

8. The stretched multilayer thermoplastic resin film according to any one of claims 1 to 7, which has a total thickness

of 10 to 1000 μm.

9. The stretched multilayer thermoplastic resin film according to any one of claims 1 to 8, wherein a ratio of the thickness of the layers containing the thermoplastic resin (B) (the sum of the two layers on both the surfaces of the (A) layer) to the total thickness of the layer containing the thermoplastic resin (A) and the layers containing the thermoplastic resin (B) (the sum of the three layers which are the (B) layer/the (A) layer/the (B) layer) is 5 to 70%.

10. The stretched multilayer thermoplastic resin film according to any one of claims 1 to 9, wherein the layer containing the thermoplastic resin (A) comprises at least one selected from the group consisting of an ultraviolet absorber, an antioxidant, an anti-coloring agent, an antistatic agent, a mold release agent, a lubricant, a dye and a pigment.

11. An optical film comprising the stretched multilayer thermoplastic resin film according to any one of claims 1 to 10.

12. A polarizer protective film comprising the optical film according to claim 11.

13. A polarizing plate comprising the polarizer protective film according to claim 12 and a polarizer.

14. A method for producing the stretched multilayer thermoplastic resin film according to any one of claims 1 to 10, which comprises stretching at a stretching temperature that is equal to or higher than a glass transition temperature TgB (°C) of the thermoplastic resin (B).

**Patentansprüche**

1. Eine gestreckte mehrlagige thermoplastische Harzfolie, welche Schichten, die ein thermoplastisches Harz (B) enthalten, auf beiden Oberflächen einer Schicht, die ein thermoplastische Harz (A) und elastische Teilchen enthält, umfasst, wobei:

die jeweiligen intrinsischen Doppelbrechungen des thermoplastischen Harzes (A) und des thermoplastischen Harzes (B), berechnet wie in der Beschreibung offenbart, innerhalb eines Bereichs von -0,005 bis 0,005 liegen;
ein Mengenanteil der elastischen Teilchen in der gesamten Schicht, die das thermoplastische Harz (A) und die elastischen Teilchen enthält, 5 bis 40 Gew.-% beträgt;
eine Glasübergangstemperatur des thermoplastischen Harzes (B), bestimmt wie in der Beschreibung offenbart, 110°C oder höher beträgt;
und eine Wasserabsorptions-Sättigungsrate des thermoplastischen Harzes (B), bestimmt wie in der Beschreibung offenbart, weniger als 1,1 Gew.-% beträgt;
und wobei das thermoplastische Harz (B) eine (Meth)acrylsäureester-Struktureinheit (a), dargestellt durch die nachstehende allgemeine Formel (1):

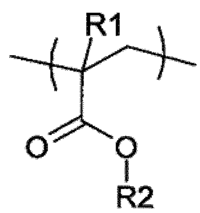

(1)

(wobei R1 ein Wasserstoffatom oder eine Methylgruppe darstellt, und R2 eine $C_1$-$C_{16}$-Kohlenwasserstoffgruppe darstellt), und eine aliphatische Vinyl-Struktureinheit (b), dargestellt durch die nachstehende allgemeine Formel (2):

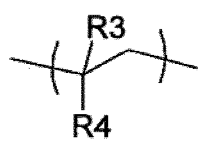

(2)

(wobei R3 ein Wasserstoffatom oder eine Methylgruppe darstellt, und R4 eine Cyclohexylgruppe oder eine

Cylohexylgruppe mit einem $C_1$-$C_4$-Kohlenwasserstoffsubstituenten darstellt) umfasst, und wobei ein Anteil der Summe der (Meth)acrylsäureester-Struktureinheit (a) und der aliphatischen Vinyl-Struktureinheit (b) 90 bis 100 Mol-%, bezogen auf die Summe aller Struktureinheiten in dem thermoplastischen Harz (B), beträgt und wobei ein Molverhältnis zwischen der (Meth)acrylsäureester-Struktureinheit (a) und der aliphatischen Vinyl-Struktureinheit (b) 55:45 bis 85:15 beträgt.

**2.** Die gestreckte mehrschichtige thermoplastische Harzfolie nach Anspruch 1, die eine Verzögerung Re in der Ebene von 0,0 bis 3,0 nm und eine Verzögerung Rth in Dickenrichtung von -10,0 bis 10,0 nm bei einer Wellenlänge von 590 nm aufweist.

**3.** Die gestreckte mehrschichtige thermoplastische Harzfolie nach Anspruch 1, wobei R1 und R2 in der allgemeinen Formel (1) jeweils eine Methylgruppe ist.

**4.** Die gestreckte mehrschichtige thermoplastische Harzfolie nach Anspruch 1 oder 2, wobei R4 in der allgemeinen Formel (2) eine Cyclohexylgruppe ist.

**5.** Die gestreckte mehrschichtige thermoplastische Harzfolie nach einem der Ansprüche 1 bis 4, wobei die elastischen Teilchen eine Methylmethacrylat-Struktureinheit und eine Acrylsäurealkylester-Struktureinheit umfassen.

**6.** Die gestreckte mehrschichtige thermoplastische Harzfolie nach einem der Ansprüche 1 bis 5, wobei es sich bei der gestreckten Folie um eine biaxial gestreckte Folie handelt.

**7.** Die gestreckte mehrschichtige thermoplastische Harzfolie nach einem der Ansprüche 1 bis 6, wobei eine Vergrößerung der Streckung in mindestens einer Streckrichtung das 1,1- bis 3,0-Fache beträgt.

**8.** Die gestreckte mehrschichtige thermoplastische Harzfolie nach einem der Ansprüche 1 bis 7, die eine Gesamtdicke von 10 bis 1000 µm aufweist.

**9.** Die gestreckte mehrschichtige thermoplastische Harzfolie nach einem der Ansprüche 1 bis 8, wobei ein Verhältnis der Dicke der Schichten, die das thermoplastische Harz (B) enthalten (die Summe der zwei Schichten auf beiden Oberflächen der (A)-Schicht), zur Gesamtdicke der Schicht, die das thermoplastische Harz (A) enthält, und der Schichten, die das thermoplastische Harz (B) enthalten (die Summe der drei Schichten, wobei es sich um die (B)-Schicht/die (A)-Schicht/die (B)-Schicht handelt), 5 bis 70 % beträgt.

**10.** Die gestreckte mehrschichtige thermoplastische Harzfolie nach einem der Ansprüche 1 bis 9, wobei die Schicht, die das thermoplastische Harz (A) enthält, mindestens eines umfasst, ausgewählt aus der Gruppe bestehend aus einem Ultraviolettabsorber, einem Antioxidationsmittel, einem Antifärbemittel, einem Antistatikmittel, einem Formtrennmittel, einem Schmiermittel, einem Farbstoff und einem Pigment.

**11.** Eine optische Folie, umfassend die gestreckte mehrschichtige thermoplastische Harzfolie nach einem der Ansprüche 1 bis 10.

**12.** Eine Polarisatorschutzfolie, umfassend die optische Folie nach Anspruch 11.

**13.** Eine Polarisationsplatte, umfassend die Polarisatorschutzfolie nach Anspruch 12 und einen Polarisator.

**14.** Ein Verfahren zur Herstellung der gestreckten mehrschichtigen thermoplastischen Harzfolie nach einem der Ansprüche 1 bis 10, das Strecken bei einer Strecktemperatur umfasst, welche gleich oder höher als eine Glasübergangstemperatur TgB (°C) des thermoplastischen Harzes (B) ist.

## Revendications

**1.** Film de résine thermoplastique multicouche étiré qui comprend des couches contenant une résine thermoplastique (B) sur les deux surfaces d'une couche qui contient une résine thermoplastique (A) et des particules élastiques, dans lequel :

les biréfringences intrinsèques respectives de la résine thermoplastique (A) et de la résine thermoplastique (B),

calculées comme divulgué dans la description, sont situées dans la plage allant de -0,005 à 0,005 ;
un rapport de teneur des particules élastiques dans toute la couche contenant la résine thermoplastique (A) et les particules élastiques est de 5 à 40 % en poids ;
une température de transition vitreuse de la résine thermoplastique (B), déterminée comme divulgué dans la description, est de 110°C ou plus ;
et un taux d'absorption d'eau à saturation de la résine thermoplastique (B), déterminé comme divulgué dans la description, est inférieur à 1,1 % en poids ;
et où la résine thermoplastique (B) comprend une unité structurelle d'ester d'acide (méth)acrylique (a) représentée par la formule générale (1) ci-dessous :

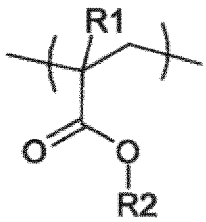

(1)

(dans laquelle R1 représente un atome d'hydrogène ou un groupe méthyle, et R2 représente un groupe hydrocarboné en $C_1$-$C_{16}$), et une unité structurelle vinyle aliphatique (b) représentée par la formule générale (2) ci-dessous :

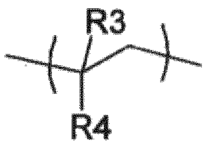

(2)

(dans laquelle R3 représente un atome d'hydrogène ou un groupe méthyle, et R4 représente un groupe cyclohexyle ou un groupe cyclohexyle portant un substituant hydrocarboné en $C_1$- $C_4$), et dans laquelle un rapport de la somme de l'unité structurelle d'ester d'acide (méth)acrylique (a) et de l'unité structurelle vinyle aliphatique (b) est de 90 à 100 % en moles par rapport à la somme de toutes les unités structurelles dans la résine thermoplastique (B), et dans laquelle un rapport molaire entre l'unité structurelle d'ester d'acide (méth)acrylique (a) et l'unité structurelle vinyle aliphatique (b) est de 55 : 45 à 85 : 15.

2. Film de résine thermoplastique multicouche étiré selon la revendication 1, qui a un retard dans le plan Re de 0,0 à 3,0 nm et un retard dans le sens de l'épaisseur Rth de -10,0 à 10,0 nm à une longueur d'onde de 590 nm.

3. Film de résine thermoplastique multicouche étiré selon la revendication 1, dans lequel chacun de R1 et R2 dans la formule générale (1) est un groupe méthyle.

4. Film de résine thermoplastique multicouche étiré selon la revendication 1 ou 2, dans lequel R4 dans la formule générale (2) est un groupe cyclohexyle.

5. Film de résine thermoplastique multicouche étiré selon l'une quelconque des revendications 1 à 4, dans lequel les particules élastiques comprennent une unité structurelle de méthacrylate de méthyle et une unité structurelle d'ester alkylique d'acide acrylique.

6. Film de résine thermoplastique multicouche étiré selon l'une quelconque des revendications 1 à 5, dans lequel le film étiré est un film étiré biaxialement.

7. Film de résine thermoplastique multicouche étiré selon l'une quelconque des revendications 1 à 6, dans lequel l'amplification de l'étirage dans au moins une direction d'étirage est de 1,1 à 3,0 fois.

8. Film de résine thermoplastique multicouche étiré selon l'une quelconque des revendications 1 à 7, qui a une épaisseur totale de 10 à 1000 µm.

9. Film de résine thermoplastique multicouche étiré selon l'une quelconque des revendications 1 à 8, dans lequel un rapport de l'épaisseur des couches contenant la résine thermoplastique (B) (la somme des deux couches sur les deux surfaces de la couche (A)) à l'épaisseur totale de la couche contenant la résine thermoplastique (A) et les couches contenant la résine thermoplastique (B) (la somme des trois couches qui sont la couche (B) / la couche (A) / la couche (B)) est de 5 à 70 %.

10. Film de résine thermoplastique multicouche étiré selon l'une quelconque des revendications 1 à 9, dans lequel la couche contenant la résine thermoplastique (A) comprend au moins l'un choisi dans le groupe constitué d'un absorbeur d'ultraviolets, un antioxydant, un agent anti-coloration, un agent antistatique, un agent de démoulage, un lubrifiant, un colorant et un pigment.

11. Film optique comprenant le film de résine thermoplastique multicouche étiré selon l'une quelconque des revendications 1 à 10.

12. Film protecteur de polariseur comprenant le film optique selon la revendication 11.

13. Plaque polarisante comprenant le film protecteur de polariseur selon la revendication 12 et un polariseur.

14. Méthode pour produire le film de résine thermoplastique multicouche étiré selon l'une quelconque des revendications 1 à 10, qui comprend un étirage à une température d'étirage qui est égale ou supérieure à la température de transition vitreuse TgB (°C) de la résine thermoplastique (B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4878302 B
- JP 2008115314 A
- US 20100134879 A1